# EUROPEAN PATENT APPLICATION

(11) **EP 4 778 988 A1**
(43) Date of publication of application: **22.07.2026**
(21) Application number: 24865182.0
(22) Date of filing: 21.08.2024
(51) Int. Cl.: C09K 3/00, C07F 7/18

(54) **COMPOSITION CONTAINING ORGANOSILICON COMPOUND**

(30) Priority: 15.09.2023 JP 2023149867
(71) Applicant: SHIN-ETSU CHEMICAL CO., LTD., Tokyo 1000005 (JP)
(72) Inventor: HIROKKAMI, Munenao, Gunma 3790224 (JP); NYUUGAKU, Takeshi, Nigata 3928601 (JP)
(74) Representative: Mewburn Ellis LLP
(86) International application number: PCT/JP2024/029587
(87) International publication number: WO 2025/057677

(57) **Abstract**

Provided is a composition in which an ureido group-containing organosilicon compound represented by formula (1) and an amino group-containing organosilicon compound represented by formula (3) are dissolved in a solvent containing alcohol and water. 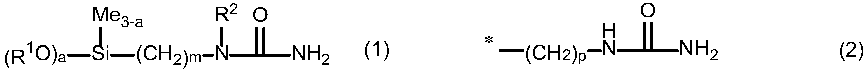 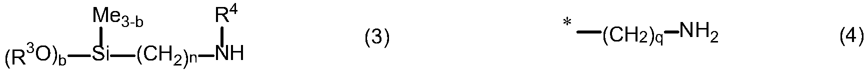 (In the formula, R¹ represents a hydrogen atom, an alkyl group, or an aryl group, R² represents a hydrogen atom, an alkyl group, or a functional group represented by formula (2), R³ represents a hydrogen atom, an alkyl group, or an aryl group, and R⁴ represents a hydrogen atom, an alkyl group, or a functional group represented by formula (4). a represents an integer of 1-3, m represents an integer of 1-12, b represents an integer of 1-3, n represents an integer of 1-12, p represents an integer of 1-12, and q represents an integer of 1-12.)

## Description

### TECHNICAL FIELD

The present invention relates to a composition containing an organosilicon compound, and more particularly to a composition in which an ureido group-containing organosilicon compound and an amino group-containing organosilicon compound are dissolved in a solvent containing an alcohol and water.

### BACKGROUND ART

Ureido group-containing organosilicon compounds such as 3-ureidopropyltriethoxysilane have been heretofore widely used as surface treatment agents for inorganic substances and adhesion aids for compositions.

As a method for producing the ureido group-containing organosilicon compound, a method in which an amino group-containing organosilicon compound and urea are reacted (Patent Documents 1 to 5) is known, and an ureido group-containing organosilicon compound obtained by the method has an advantage that the ureido group-containing organosilicon compound has good quality in that the content of a carbamic acid ester compound which is an impurity is low, and a metal catalyst is not contained.

On the other hand, an ureido group-containing organosilicon compound does not have sufficient water solubility, and products in which 3-ureidopropyltriethoxysilane is diluted with an alcohol such as methanol are commonly used. Improvement of water solubility has been required.

### PRIOR ART DOCUMENTS

### PATENT DOCUMENTS

Patent Document 1: JP-A S63-188688
Patent Document 2: JP-A 2020-045304
Patent Document 3: DE102006018500A1
Patent Document 4: CN104262382A
Patent Document 5: CN104628760A

### SUMMARY OF INVENTION

### TECHNICAL PROBLEM

The present invention has been made in view of the above-described circumstances, and an object of the present invention is to provide a composition in which an ureido group-containing organosilicon compound is dissolved in a solvent containing water.

### SOLUTION TO PROBLEM

The present inventors have conducted intensive studies for solving the above-described problems, and resultantly found that by using a specific ureido group-containing organosilicon compound and a specific amino group-containing organosilicon compound in combination, a composition which has excellent water solubility and in which the ureido group-containing organosilicon compound is dissolved in a solvent containing alcohol and water is obtained.

That is, the present invention provides:
1. A composition comprising an ureido group-containing organosilicon compound of the following formula (1) and an amino group-containing organosilicon compound of the following formula (3), which are dissolved in a solvent comprising an alcohol and water, 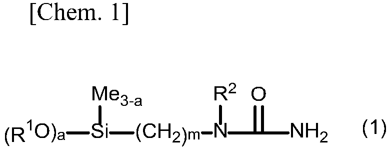
   wherein R¹ each independently represents a hydrogen atom, an alkyl group having 1 to 10 carbon atoms, or an aryl group having 6 to 10 carbon atoms, R² represents a hydrogen atom, an alkyl group having 1 to 10 carbon atoms, or a functional group of the following formula (2): 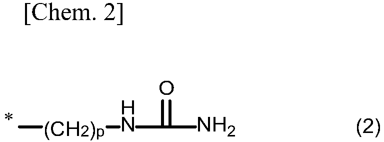
   wherein the asterisk * denotes a bond to an adjacent atom, and "p" represents an integer of 1 to 12, Me represents a methyl group, "a" represents an integer of 1 to 3, and "m" represents an integer of 1 to 12 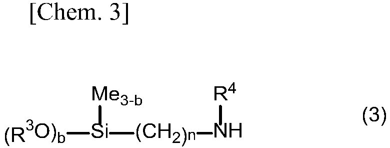
   wherein R³ each independently represents a hydrogen atom, an alkyl group having 1 to 10 carbon atoms, or an aryl group having 6 to 10 carbon atoms, R⁴ represents a hydrogen atom, an alkyl group having 1 to 10 carbon atoms, or a functional group of the following formula (4):
      [Chem. 4]

      *-(CH₂)_{q}-NH₂ (4)
   wherein the asterisk * denotes a bond to an adjacent atom, and "q" represents an integer of 1 to 12, Me represents a methyl group, "b" represents an integer of 1 to 3, and "n" represents an integer of 1 to 12;
2. The composition according to 1, wherein a content of the amino group-containing organosilicon compound of the formula (3) is 0.0001 to 10 parts by weight per 100 parts by weight of the ureido group-containing organosilicon compound of the formula (1);
3. The composition according to 1 or 2, wherein the alcohol has the following formula (5):

   R⁵OH (5)

   wherein R⁵ is an alkyl group having 1 to 10 carbon atoms or an aryl group having 6 to 10 carbon atoms;
4. The composition according to any of 1 to 3, wherein a content of the alcohol is 10 to 1,000 parts by weight per 100 parts by weight of the ureido group-containing organosilicon compound of the formula (1);
5. The composition according to any of 1 to 4, wherein a content of water is 1,000 to 30,000 parts by weight per 100 parts by weight of the ureido group-containing organosilicon compound of the formula (1);
6. The composition according to any of 1 to 5, wherein a content ratio of the alcohol and water is 1/1 to 1/300 on a weight basis; and
7. The composition according to any of 1 to 6, wherein the water is water that has been adjusted to acidity.

### ADVANTAGEOUS EFFECTS OF INVENTION

A composition of the present invention, in which an ureido group-containing organosilicon compound is dissolved in a solvent containing water, thus is useful as a surface treatment agent for inorganic substances, or an additive for aqueous compositions.

### DESCRIPTION OF EMBODIMENTS

Hereinafter, the present invention is described in detail.

A composition of the present invention includes an ureido group-containing organosilicon compound of the following formula (1) (hereinafter, referred to as a compound (1)) and an amino group-containing organosilicon compound of the following formula (3) (hereinafter, referred to as a compound (3)), which are dissolved in a solvent containing an alcohol and water.

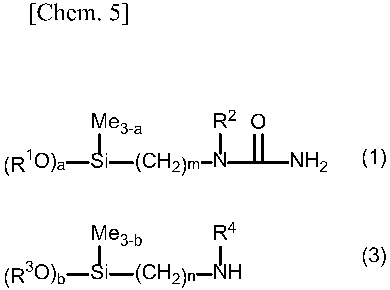

The ureido group-containing organosilicon compound in the composition of the present invention has the following formula (1).

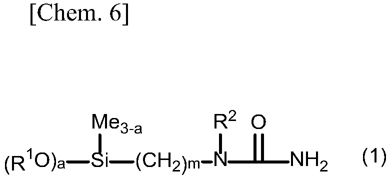

In the formula (1), R¹ each independently represents a hydrogen atom, an alkyl group having 1 to 10 carbon atoms, or an aryl group having 6 to 10 carbon atoms.

The C₁-C₁₀ alkyl group as R¹ preferably has 1 to 8 carbon atoms, more preferably 1 to 6 carbon atoms, and may be linear, cyclic, or branched. Specific examples thereof include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl, and cyclooctyl groups.

The C₆-C₁₀ aryl group as R¹ preferably has 6 to 8 carbon atoms. Specific examples thereof include phenyl, α-naphthyl, and β-naphthyl groups.

Among them, a hydrogen atom, a methyl group and an ethyl group are preferred as R¹.

The subscript a represents an integer of 1 to 3, preferably 2 or 3, and m represents an integer of 1 to 12, preferably an integer of 1 to 8, and more preferably 3 from the perspective of starting material procurement.

R² represents a hydrogen atom, an alkyl group having 1 to 10 carbon atoms, or a functional group of the following formula (2), and the C₁-C₁₀ alkyl group preferably has 1 to 8 carbon atoms, more preferably 1 to 6 carbon atoms. Specific examples are as exemplified for R¹, and linear alkyl groups are preferred, with methyl and ethyl groups being more preferred.

Me represents a methyl group. 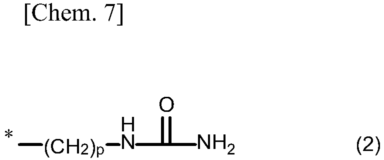 wherein the asterisk * is as described above.

In the formula (2), p represents an integer of 1 to 12, and is preferably an integer of 1 to 8, and more preferably 2 from the perspective of availability of starting materials.

Specific examples of the compound of the formula (1) include, but are not limited to, compounds of the following formulae (6) to (10). Among them, compounds of the following formula (6) are preferred. 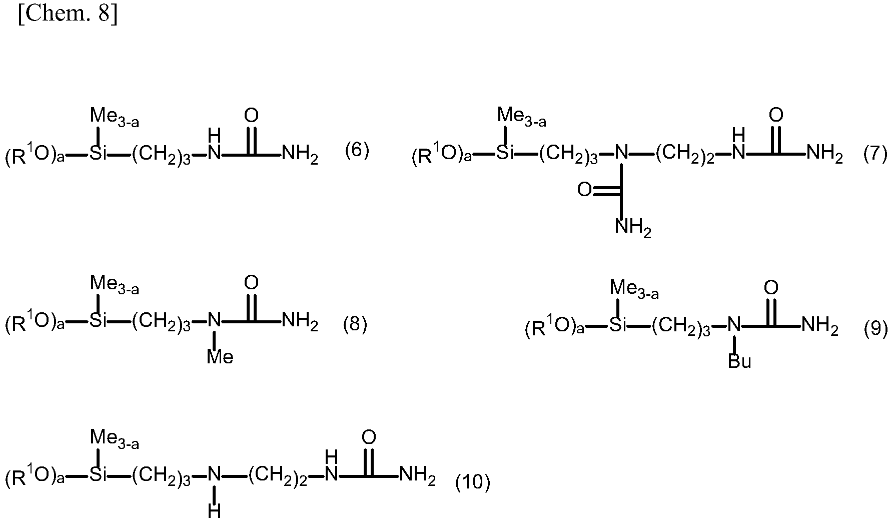 wherein R¹, Me and a are as described above, and Bu represents a n-butyl group.

These compounds may be commercially available products, or may be produced. In a case of production, the production method is not particularly limited, and a heretofore known production method can be utilized. For example, the compounds can be obtained by a method in which an amino group-containing organosilicon compound and urea are reacted by a method described in JP-A 2020-045304.

On the other hand, the amino group-containing organosilicon compound in the composition of the present invention has the following formula (3).

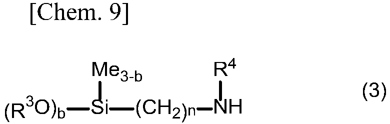

In the formula (3), R³ each independently represents a hydrogen atom, an alkyl group having 1 to 10 carbon atoms, or an aryl group having 6 to 10 carbon atoms.

The C₁-C₁₀ alkyl group as R³ preferably has 1 to 8 carbon atoms, more preferably 1 to 6 carbon atoms, and may be linear, cyclic or branched, and the C₆-C₁₀ aryl group as R³ preferably has 6 to 8 carbon atoms. Specific examples of the alkyl group and the aryl group are as exemplified for R¹, and among them, a hydrogen atom, a methyl group and an ethyl group are preferred as R³.

The subscript b represents an integer of 1 to 3, preferably 2 or 3, and n represents an integer of 1 to 12, preferably an integer of 1 to 8, and more preferably 3 from the perspective of starting material procurement.

R⁴ represents a hydrogen atom, an alkyl group having 1 to 10 carbon atoms, or a functional group of the following formula (4), and the C₁-C₁₀ alkyl group preferably has 1 to 8 carbon atoms, more preferably 1 to 6 carbon atoms. Specific examples are as exemplified for R¹, and methyl and ethyl groups are more preferred.
[Chem. 10]

*-(CH₂)_{q}-NH₂ (4)

wherein the asterisk * is as described above.

In the formula (4), q represents an integer of 1 to 12, and is preferably an integer of 1 to 8, and more preferably 2 from the perspective of availability of starting materials.

Specific examples of the compound (3) include, but are not limited to, compounds of the following formulae (11) to (14). Among them, compounds of the following formula (11) are preferred. 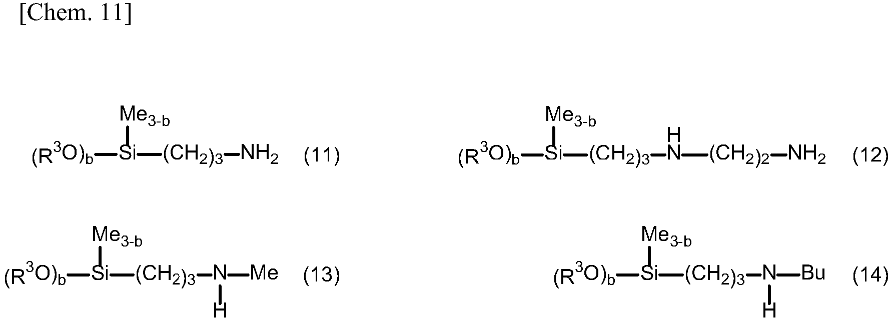 wherein R³, Me, Bu and b are as described above.

These compounds can be obtained as commercially available products. Examples of the compound of the formula (11) include KBM-903 and KBE-903 (both manufactured by Shin-Etsu Chemical Co., Ltd.), and examples of the compound represented by the formula (12) include KBM-602 and KBM-603 (both manufactured by Shin-Etsu Chemical Co., Ltd.).

The content of the compound (3) in the composition of the present invention is preferably 0.0001 to 10 parts by weight, more preferably 0.001 to 3 parts by weight, and still more preferably 0.001 to 1 parts by weight, per 100 parts by weight of the compound (1).

Examples of the alcohol in the composition of the present invention include alcohols of the following formula (5).

R⁵OH (5)

In the formula (5), R⁵ each independently represents an alkyl group having 1 to 10 carbon atoms, or an aryl group having 6 to 10 carbon atoms.

The C₁-C₁₀ alkyl group as R⁵ preferably has 1 to 8 carbon atoms, more preferably 1 to 6 carbon atoms, and may be linear, cyclic or branched, and the C₆-C₁₀ aryl group as R⁵ preferably has 6 to 8 carbon atoms. Specific examples of the alkyl group and the aryl group are as exemplified for R¹, and among them, a methyl group is preferred as R⁵.

The content of the alcohol in the composition of the present invention is preferably 10 to 1,000 parts by weight, more preferably 50 to 300 parts by weight, and still more preferably 50 to 200 parts by weight, per 100 parts by weight of the compound (1).

The content of water in the composition of the present invention is preferably 1,000 to 30,000 parts by weight, more preferably 5,000 to 20,000 parts by weight, and still more preferably 5,000 to 10,000 parts by weight, per 100 parts by weight of the compound (1).

The content ratio of alcohol to water in the composition of the present invention is preferably 1/1 to 1/300, more preferably 1/10 to 1/200, and still more preferably 1/10 to 1/100, on a weight basis.

The method for producing the composition containing water according to the present invention is not particularly limited. For example, the composition can be prepared by mixing water and an alcohol solution of the compound (1) and the compound (3) (a composition free of water) which is prepared in advance.

Specifically, first, the compound (1), the compound (3) and the alcohol are mixed, and the order of mixing is not particularly limited. The compound (1) and the alcohol may be mixed, followed by addition of the compound (2), the compound (2) may be mixed with the alcohol, followed by addition of the compound (1), or the compound (1) and the compound (2) may be mixed with the alcohol at the same time. It is preferred that the compound (1) and the alcohol are mixed, the compound (3) is then added, and mixing is further performed. In mixing, the compound (1) or the compound (2) may be added in one portion, or may be gradually added by dropwise addition or the like. The temperature in mixing is preferably 10 to 50°C, and more preferably 15 to 40°C, and the mixing time is preferably 0.5 to 3 hours, and more preferably 0.5 to 2 hours.

After mixing, the resulting solution is filtered if necessary, and left to stand preferably at 10 to 50°C, and more preferably at 15 to 40°C, preferably for 1 to 10 days, and more preferably for 3 to 10 days, and the resulting alcohol solution and water are then mixed. In mixing of the alcohol solution and water, water may be added to the alcohol solution, or the alcohol solution may be added to water, and the alcohol solution or water may be added in one portion, or may be added portionwise. The temperature and time in mixing of the alcohol solution and water are identical, respectively, to the mixing temperature and time described above.

For the composition of the present invention, it is preferable to use water that has been adjusted to acidity from the perspective of stability. Examples of the acid for adjusting the water to acidity include organic acids such as formic acid, acetic acid and citric acid, and inorganic acids such as hydrochloric acid. In the case where an acid is used, the addition amount thereof is preferably 0.001 to 0.5 wt% and more preferably 0.01 to 0.1 wt% of the entire composition. In the case where an acid is used, water acidified in advance by mixing the acid and water may be used, or the acid may be added to the composition of the present invention for acidification.

The content of the compound (1) in the composition of the present invention is preferably 0.05 to 2.0 wt%, more preferably 0.05 to 1.5 wt%, and still more preferably 0.1 to 1 wt%.

### EXAMPLES

Examples and Comparative Examples are given below to more concretely illustrate the invention, although the invention is not limited by these Examples.

In the following Examples, the "part" means the part by weight. The reaction ratio was determined by ¹H-NMR measurement.

### [1] Synthesis of ureido group-containing organosilicon compound

### [Synthesis Example 1]

A 10 L separable flask equipped with a stirrer, a reflux condenser, a dropping funnel and a thermometer was charged with 901 g (15 mol) of urea and 996 g (4.5 mol) of 3-aminopropyltriethoxysilane (KBE-903 manufactured by Shin-Etsu Chemical Co., Ltd.), which were stirred at 117°C for 20 hours. The reaction ratio was shown to be 95 mol% by ¹H-NMR. Thereafter, 2,324 g (10.5 mol) of 3-aminopropyltriethoxysilane (KBE-903 manufactured by Shin-Etsu Chemical Co., Ltd.) was added dropwise with stirring at 120°C over 10 hours. After completion of the dropwise addition, the mixture was stirred at 117°C for 5 hours. The reaction ratio measured by ¹H-NMR was 100 mol%. After completion of the reaction, evaporation under reduced pressure was performed to obtain an ureido group-containing organosilicon compound of the following formula (15).

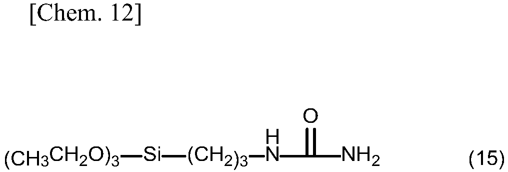

### [2] Production of composition and evaluation of solubility

### [Examples 1 to 3 and Comparative Example 1]

The ureido group-containing organosilicon compound obtained in Synthesis Example 1 and methanol were mixed at 25°C at a mixing ratio shown in Table 1 below, 3-aminopropyltriethoxysilane (KBE-903 manufactured by Shin-Etsu Chemical Co., Ltd.) was added dropwise, and the mixture was then stirred for 1 hour. The solution was filtered, allowed to stand at 25°C for 7 days, and then mixed with 0.05 wt% aqueous acid water to obtain a composition.

The appearance of the obtained composition after 5 minutes was visually confirmed. Evaluation was performed by assigning "○" if complete dissolution was achieved, and assigning "×" if dissolution was not achieved, and turbidity was observed.

**[Table 1]**

| | | Example 1 | Example 2 | Example 3 | Comparative Example 1 |
|---|---|---|---|---|---|
| Composition (part) | Ureido group-containing organosilicon compound | 100 | 100 | 100 | 100 |
| | Methanol | 100 | 100 | 100 | 100 |
| | 3-Aminopropyltriethoxysilane | 0.01 | 0.1 | 0.2 | - |
| | 0.05 wt% aqueous acetic acid | 9,800 | 9,800 | 9,800 | 9,800 |
| Appearance of composition | | ○ | ○ | ○ | × |

## Claims

1. A composition comprising an ureido group-containing organosilicon compound of the following formula (1) and an amino group-containing organosilicon compound of the following formula (3), which are dissolved in a solvent comprising an alcohol and water, 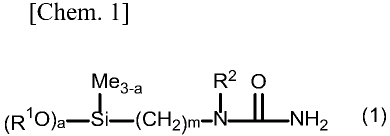
wherein R¹ each independently represents a hydrogen atom, an alkyl group having 1 to 10 carbon atoms, or an aryl group having 6 to 10 carbon atoms, R² represents a hydrogen atom, an alkyl group having 1 to 10 carbon atoms, or a functional group of the following formula (2): 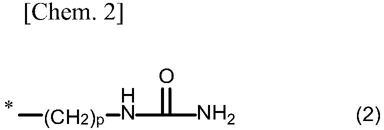
wherein the asterisk * denotes a bond to an adjacent atom, and "p" represents an integer of 1 to 12, Me represents a methyl group, "a" represents an integer of 1 to 3, and "m" represents an integer of 1 to 12 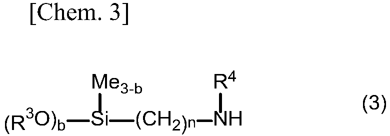
wherein R³ each independently represents a hydrogen atom, an alkyl group having 1 to 10 carbon atoms, or an aryl group having 6 to 10 carbon atoms, R⁴ represents a hydrogen atom, an alkyl group having 1 to 10 carbon atoms, or a functional group of the following formula (4):
[Chem. 4]
*-(CH₂)_{q}-NH₂ (4)
wherein the asterisk * denotes a bond to an adjacent atom, and "q" represents an integer of 1 to 12, Me represents a methyl group, "b" represents an integer of 1 to 3, and "n" represents an integer of 1 to 12.

2. The composition of claim 1 wherein a content of the amino group-containing organosilicon compound of the formula (3) is 0.0001 to 10 parts by weight per 100 parts by weight of the ureido group-containing organosilicon compound of the formula (1).

3. The composition of claim 1 or 2 wherein the alcohol has the following formula (5):
R⁵OH (5)
wherein R⁵ is an alkyl group having 1 to 10 carbon atoms or an aryl group having 6 to 10 carbon atoms.

4. The composition of any one of claims 1 to 3 wherein a content of the alcohol is 10 to 1,000 parts by weight per 100 parts by weight of the ureido group-containing organosilicon compound of the formula (1).

5. The composition of any one of claims 1 to 4 wherein a content of water is 1,000 to 30,000 parts by weight per 100 parts by weight of the ureido group-containing organosilicon compound of the formula (1).

6. The composition of any one of claims 1 to 5 wherein a content ratio of the alcohol and water is 1/1 to 1/300 on a weight ratio basis.

7. The composition of any one of claims 1 to 6 wherein the water is water that has been adjusted to acidity.
